# EUROPEAN PATENT APPLICATION

(11) **EP 4 734 161 A1**
(43) Date of publication of application: **29.04.2026**
(21) Application number: 25206228.6
(22) Date of filing: 02.10.2025
(51) Int. Cl.: H01M 4/04

(54) **ELECTRODE MANUFACTURING DEVICE AND ELECTRODE MANUFACTURING METHOD USING THE SAME**

(30) Priority: 17.10.2024 KR 20240142114
(71) Applicant: SAMSUNG SDI CO., LTD., Yongin-si, Gyeonggi-do 17084 (KR)
(72) Inventor: KIM, Kangmin, 17084 Yongin-Si, Gyeonggi-do (KR); KIM, Sangpil, 17084 Yongin-Si, Gyeonggi-do (KR); LEE, Jinhyon, 17084 Yongin-Si, Gyeonggi-do (KR); LEE, Gaeon, 17084 Yongin-Si, Gyeonggi-do (KR)
(74) Representative: Michalski Hüttermann & Partner Patentanwälte mbB

(57) **Abstract**

An example electrode manufacturing device includes a feeding device configured to supply electrode powder, a guide chute adjacent to a discharge end of the feeding device and into which the electrode powder supplied from the feeding device is introduced, a dispersing drum between the feeding device and the guide chute and configured to disperse the electrode powder moving from the feeding device to the guide chute, and a press roller adjacent to a discharge end of the guide chute and configured to press the electrode powder discharged from the guide chute.

## Description

### BACKGROUND

### TECHNICAL FIELD

Aspects of embodiments of the present disclosure relate to an electrode manufacturing device, and to an electrode manufacturing method using the electrode manufacturing device.

### Description of the Related Art

Unlike primary batteries that are not designed to be (re)charged, secondary (or rechargeable) batteries are designed to be discharged and recharged. Low-capacity secondary batteries are typically used in portable, small electronic devices, such as smart phones, feature phones, notebook computers, digital cameras, and camcorders, while large-capacity secondary batteries are widely used as power sources for driving motors in hybrid vehicles and electric vehicles and for storing power (for example, home and/or utility scale power storage). A secondary battery generally includes an electrode assembly composed of or including a positive electrode and a negative electrode, a case accommodating the same, and electrode terminals connected to the electrode assembly.

The electrode manufacturing process of the secondary battery is carried out using a wet method. In the wet method, not only an active material, which is a main material of the electrode, but also a conductive material, a filler, a binder, and the like are mixed in a solvent to make a fluid slurry, the fluid slurry is sprayed and applied on a current collector such that the current collector is coated therewith, and then the liquid solvent is dried. In such a wet method, various defects occur due to the difference in evaporation rates between the surface and the inside during the drying process of the solvent. Thus, it may be challenging to operate the drying equipment, resulting in economic and time losses.

To address the above issues, a dry method may be advantageous. In the dry method, a free standing film is manufactured through a rolling process in which a dry electrode powder mixed with a solid powder of active material, binder, and conductive material is passed between two rollers without using the solvent, and is laminated on the current collector. In such a case, the electrode is manufactured by laminating the free standing film on the current collector.

In the dry method, the drying process is omitted. Thus, the method has advantages of being able to manufacture thicker film plates compared to the wet method, and being able to increase the energy density of secondary batteries. However, the dry method may present challenges including non-uniform mechanical properties such as tensile strength and formability of the free standing film because particle size segregation may occur during the process of mixing, transporting, and feeding the electrode powder. Here, particle size segregation refers to a phenomenon in which particles having different sizes and densities are mixed and are in a certain state of motion to have a non-uniform mixing state.

Therefore, it is desirable to provide an electrode manufacturing device and manufacturing method capable of reducing or preventing the particle size segregation of dry electrode powder from occurring, and substantially uniformly dispersing the dry electrode powder.

The above information disclosed in this Background section is for enhancement of understanding of the background of the present disclosure, and therefore, it may contain information that does not constitute related (or prior) art.

### SUMMARY

Aspects of embodiments of the present disclosure include an electrode manufacturing device, and an electrode manufacturing method using the electrode manufacturing device for solving the above issues.

However, the technical issues to be addressed by the present disclosure is not limited to the above, and other issues not mentioned herein, and aspects and features of the present disclosure that would address such issues, are clearly understood by those skilled in the art from the description of the present disclosure below.

According to some example embodiments of the present disclosure, an electrode manufacturing device may include a feeding device configured to supply electrode powder, a guide chute that is adjacent to a discharge end of the feeding device and into which the electrode powder supplied from the feeding device is introduced, a dispersing drum between the feeding device and the guide chute and configured to disperse the electrode powder moving from the feeding device to the guide chute, and a press roller adjacent to a discharge end of the guide chute and configured to press the electrode powder discharged from the guide chute.

According to some example embodiments of the present disclosure, the dispersing drum may include a base that has a cylindrical shape, and at least one or more blades that are separate from each other in a width direction of the base and that are formed such that the electrode powder supplied from the feeding device is divided and dispersed into a plurality of branches.

According to some example embodiments of the present disclosure, a width of the dispersing drum may be less than a width of the guide chute.

According to some example embodiments of the present disclosure, the dispersing drum may include a first dispersing drum and a second dispersing drum between the feeding device and the guide chute, the second dispersing drum may be closer to the guide chute than the first dispersing drum, and the number of blades formed on the second dispersing drum may be greater than the number of blades formed on the first dispersing drum.

According to some example embodiments of the present disclosure, an outer circumferential surface of the base may correspond to an inner space of the guide chute, and the electrode powder discharged from the feeding device may be introduced into the guide chute along the outer circumferential surface of the base.

According to some example embodiments of the present disclosure, a cross-section of the blade may be a polygon that is narrower at a position closer to a top of the blade, and an angle of a slope of the cross-section of the blade with respect to the base may be greater than a repose angle of the electrode powder.

According to some example embodiments of the present disclosure, a cross-section of the blade may be a curved shape that is narrower at a position closer to a top of the blade.

According to some example embodiments of the present disclosure, the electrode manufacturing device may further include a driving unit that is connected to the dispersing drum and configured to apply a rotational force to the dispersing drum, and a control unit connected to the driving unit and configured to control a speed of rotation of the dispersing drum.

According to some example embodiments of the present disclosure, the control unit may be configured to control the speed of rotation of the dispersing drum, on the basis of at least one of a type of the electrode powder or a feeding condition of the electrode powder supplied to the feeding device.

According to some example embodiments of the present disclosure, the electrode manufacturing device may further include a back plate connected to one end surface of the guide chute adjacent to the dispersing drum.

According to some example embodiments of the present disclosure, the electrode manufacturing device may further include a collecting device under the dispersing drum and into which at least a part of the electrode powder falling between the dispersing drum and the guide chute is collected.

According to some example embodiments of the present disclosure, the blade may be detachable from the base and a position of the blade may be adjusted in the width direction of the base.

According to some example embodiments of the present disclosure, an electrode manufacturing method may include supplying electrode powder toward a guide chute through a feeding device, dispersing the electrode powder moving from the feeding device to the guide chute through a dispersing drum positioned between the feeding device and the guide chute, and pressing the electrode powder discharged from a discharge end of the guide chute through a press roller.

According to some example embodiments of the present disclosure, the electrode manufacturing method may further include collecting at least a part of the electrode powder falling between the dispersing drum and the guide chute through a collecting device disposed under the dispersing drum, and supplying at least the part of the electrode powder collected in the collecting device to the feeding device.

According to some example embodiments of the present disclosure, the dispersing drum may include a base that has a cylindrical shape, and at least one or more blades that are separate from each other in a width direction of the base and that are formed such that the electrode powder supplied from the feeding device is divided and dispersed into a plurality of branches.

According to some example embodiments of the present disclosure, an outer circumferential surface of the base may correspond to an inner space of the guide chute, and the electrode powder discharged from the feeding device may be introduced into the guide chute along the outer circumferential surface of the base.

According to some example embodiments of the present disclosure, a cross-section of the blade may be a polygon that is narrower at a position closer to a top of the blade, and an angle of a slope of the cross-section of the blade with respect to the base may be greater than a repose angle of the electrode powder.

According to some example embodiments of the present disclosure, the electrode manufacturing method may further include controlling a speed of rotation of the dispersing drum by controlling a driving unit connected to the dispersing drum.

According to some example embodiments of the present disclosure, in the controlling of the speed of rotation, the control unit may control the speed of rotation of the dispersing drum, on the basis of at least one of a type of the electrode powder or a feeding condition of the electrode powder supplied to the feeding device.

According to some example embodiments of the present disclosure, the dispersing drum may include a first dispersing drum and a second dispersing drum located between the feeding device and the guide chute, the second dispersing drum may be closer to the guide chute than the first dispersing drum, the number of blades formed on the second dispersing drum may be greater than the number of blades formed on the first dispersing drum. The dispersing of the electrode powder may include dispersing the electrode powder through the first dispersing drum, and dispersing the electrode powder through the second dispersing drum.

According to various example embodiments of the present disclosure, the electrode powder entering the guide chute through the dispersing drum can be uniformly, or substantially uniformly, dispersed. Accordingly, the particle size segregation phenomenon can be reduced or prevented from occurring in the dry process, and the mechanical properties such as the tensile strength and formability of the free standing film can be improved. As a result, it is possible to improve the quality of the dry electrode plate.

According to various example embodiments of the present disclosure, the control unit is configured to control the speed of rotation of the dispersing drum, and to adjust the position of the detachable blade. In such a manner, it is possible to cope with changes in the electrode powder flow characteristics due to changes in material conditions such as the constituent material or composition of the electrode powder, or process conditions such as a speed of feeding or an amount of feeding.

According to various example embodiments of the present disclosure, the collecting device of the electrode powder is disposed. With such a configuration, the electrode powder falling between the dispersing drum and the guide chute can be collected and recycled.

Aspects and features of the present disclosure are not limited to those described above, and other aspects and features not mentioned are clearly understood by a person skilled in the art from the detailed description, described below.

### BRIEF DESCRIPTION OF THE DRAWINGS

The following drawings attached to this specification illustrate example embodiments of the present disclosure, and further describe aspects and features of the present disclosure together with the detailed description of the present disclosure. Thus, the present disclosure should not be construed as being limited to the drawings.
FIG. 1 illustrates an electrode manufacturing device according to some example embodiments of the present disclosure.
FIG. 2 illustrates an electrode manufacturing device according to some example embodiments of the present disclosure.
FIG. 3 illustrates a configuration of an electrode manufacturing device according to some example embodiments of the present disclosure.
FIG. 4 illustrates the electrode powder branching off along the dispersing drum in an electrode manufacturing device according to an example embodiment of the present disclosure.
FIG. 5 illustrates an example of a dispersing drum on which two blades are formed.
FIG. 6 illustrates an example of a dispersing drum on which one blade is formed.
FIG. 7 illustrates an electrode manufacturing device according to other example embodiments of the present disclosure.
FIG. 8 illustrates a side of the electrode manufacturing device according to FIG. 7.
FIG. 9 illustrates an electrode manufacturing device according to some example embodiments of the present disclosure in which a back plate is formed.
FIG. 10 illustrates a side of the electrode manufacturing device of FIG. 9.
FIG. 11 illustrates an electrode manufacturing device according to some example embodiments of the present disclosure in which a collecting device is formed.
FIG. 12 illustrates a side of the electrode manufacturing device of FIG. 11.
FIG. 13 illustrates the electrode manufacturing device of FIG. 11 as viewed from a rear thereof.
FIG. 14 illustrates a configuration of an electrode manufacturing device according to some example embodiments of the present disclosure in which a collecting device is formed.
FIG. 15 illustrates a dispersing drum according to some example embodiments of the present disclosure.
FIG. 16 illustrates an area A of FIG. 15 as an example of a cross-section shape of a blade.
FIG. 17 illustrates the area A of FIG. 15 as an example of a cross-section shape of a blade.
FIG. 18 illustrates the area A of FIG. 15 as an example of a cross-section shape of a blade.
FIG. 19 illustrates the area A of FIG. 15 as an example of a cross-section shape of a blade.
FIG. 20 illustrates a flowchart showing an example of an electrode manufacturing method according to an example embodiment of the present disclosure.

### DETAILED DESCRIPTION

Hereinafter, example embodiments of the present disclosure are described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The example embodiments described in this specification and the configurations shown in the drawings are only some of the example embodiments of the present disclosure and do not represent all of the technical spirit, aspects, and features of the present disclosure. Accordingly, it should be understood that there may be various equivalents and modifications that can replace or modify the embodiments described herein at the time of filing this application.

It is understood that when an element or layer is referred to as being "on, " "connected to, " or "coupled to" another element or layer, the element or layer may be "directly on," "directly connected," or "directly coupled" to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, and the like, may be exaggerated for clarity of illustration. The same reference numerals designate the same elements. As used herein, the term "and/or" includes any and all combinations of one or more of the associated listed items. Further, the use of "may" when describing example embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is understood that, although the terms first, second, third, and the like, may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath, " "below, " "lower, " "above, " "upper, " and the like, may be used herein for ease of description to describe one element or feature's relationship to another element(s) or feature(s) as illustrated in the figures. It is understood that the spatially relative terms are intended to encompass different orientations of the device in use or operation in addition to the orientation depicted in the figures. For example, when the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing example embodiments of the present disclosure, and is not intended to be limiting of the present disclosure. As used herein, the singular forms "a" and "an" are intended to include the plural forms as well, unless the context clearly indicates otherwise. It is further understood that the terms "includes," "including," "comprises," and/or "comprising," when used in this specification, specify the presence of stated features, integers, operations, elements, and/or components but do not preclude the presence or addition of one or more other features, integers, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, and the like, as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that the parameter is uniform in terms of an average.

Throughout the specification, unless otherwise stated, each element may be singular or plural.

Arranging an optional element "above (or below)" or "on (under)" another element may mean that the optional element may be disposed in contact with the upper (or lower) surface of the element, and another element may also be interposed between the element and the optional element disposed on (or under) the element.

In addition, it is understood that when a component is referred to as being "linked, " "coupled, " or "connected" to another component, the elements may be directly "coupled, " "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are intended to describe example embodiments of the present disclosure and are not intended to limit the present disclosure.

When the term "substantially" is used in this specification in connection with a numerical value, it is intended that the associated numerical value include a tolerance of ±10% around the stated numerical value.

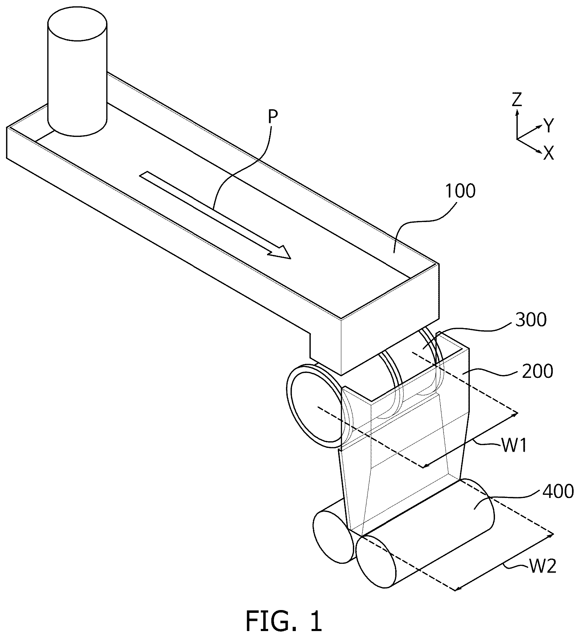

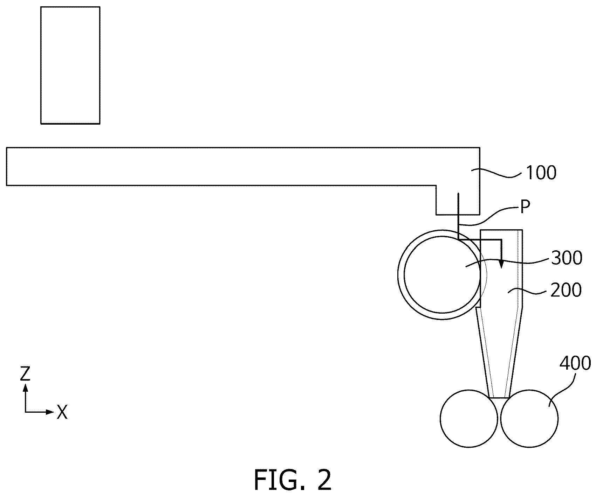

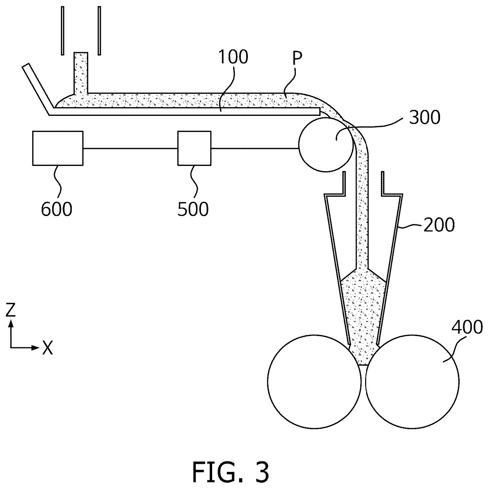

FIG. 1 illustrates an electrode manufacturing device according to some example embodiments of the present disclosure. FIG. 2 illustrates an electrode manufacturing device according to some example embodiments of the present disclosure. FIG. 3 illustrates a configuration of an electrode manufacturing device according to some example embodiments of the present disclosure.

An electrode manufacturing device according to an example embodiment of the present disclosure may include a feeding device 100, a guide chute 200 into which electrode powder P is introduced, a dispersing drum 300 that disperses the electrode powder P, and a press roller 400. The electrode manufacturing device may be a device configured to manufacture an electrode for a secondary battery using a dry process.

In an example embodiment, the feeding device 100 may be a device that supplies the electrode powder P. The feeding device 100 and the dispersing drum 300 may disperse the electrode powder P in a width direction (Y-axis direction) and supply the electrode powder P to the guide chute 200. For example, the feeding device 100 may move the electrode powder P toward the guide chute 200 in an X-axis direction. The feeding device 100 may substantially uniformly disperse the electrode powder P in the Y-axis direction through, e.g., vibration, and supply the electrode powder P to the guide chute 200.

The guide chute 200 may be configured to allow the electrode powder P supplied substantially uniformly in the width direction (Y-axis direction) from the feeding device 100 to pass therethrough. The guide chute 200 may be adjacent to a discharge end of the feeding device 100. The guide chute 200 may be configured to allow the electrode powder P supplied from the feeding device 100 to be introduced thereinto.

The dispersing drum 300 may be located between the feeding device 100 and the guide chute 200. In an example embodiment, the dispersing drum 300 may be between the feeding device 100 and the guide chute 200 in a Z-axis direction. The dispersing drum 300 may disperse the electrode powder P moving from the feeding device 100 to the guide chute 200.

In an example embodiment, a width W1 of the dispersing drum 300 may be less than a width W2 of the guide chute 200. When the electrode powder P is introduced into the guide chute 200 from the feeding device 100, the electrode powder P may be introduced into the guide chute 200 along the dispersing drum 300. The width W1 of the dispersing drum 300 is less than the width W2 of the guide chute 200. Therefore, the electrode powder P supplied from the feeding device 100 may be stably introduced into an inner space of the guide chute 200 without being discharged to the outside.

An outer circumferential surface of the dispersing drum 300 may correspond to the inner space of the guide chute 200. Accordingly, the electrode powder P discharged from the feeding device 100 may be introduced into the inside of the guide chute 200 along the outer circumferential surface of the dispersing drum 300. For example, the dispersing drum 300 may be configured to rotate. The dispersing drum 300 may be rotated in a specific or desired direction (for example, clockwise) on the basis of the configuration diagram of FIG. 3, introducing the electrode powder P into the inside of the guide chute 200. In an example, the electrode powder P may move toward the guide chute 200 in the X-axis direction, and the dispersing drum 300 may rotate clockwise in the same direction as the moving direction of the electrode powder P, guiding the electrode powder P into the inner space of the guide chute 200.

The press roller 400 may be adjacent to a discharge end of the guide chute 200. The press roller 400 may press the electrode powder P discharged from the guide chute 200. For example, the press roller 400 may be configured with a pair of rollers which rotation directions are opposite to each other. In an example, the press roller 400 may press the electrode powder P by rotating the roller which is closer to the feeding device 100 in the X-axis direction of FIG. 3, clockwise, and rotating the other roller counterclockwise. A width of the press roller 400 in the Y-axis direction may be formed to be greater than a width of the discharge end of the guide chute 200.

In an example embodiment, the electrode manufacturing device may maintain a height at which the electrode powder P is fed from above the press roller 400 and press the electrode powder P with the press roller 400, manufacturing the electrode member. In such a case, the height at which the electrode powder P is fed may be set on the basis of a height of the guide chute 200 in the Z-axis direction. The electrode powder P may be supplied from the feeding device 100 and supplied to the press roller 400 while maintaining the width of the electrode powder P in the Y-axis direction without being disconnected. The electrode powder P may be pressed while passing through the press roller 400, becoming an electrode member having a film shape or a sheet shape.

The press roller 400 may be configured to press the electrode powder P distributed with a substantially uniform particle size through the dispersing drum 300 such that the electrode powder P becomes a sheet-shaped electrode member having a predetermined or desired thickness. The electrode member may be laminated on a current collector to form a dry electrode of, e.g., a secondary battery. Thereby, the electrode member may be manufactured by the dry process.

In an example embodiment, the electrode manufacturing device may further include a driving unit 500 configured to drive the dispersing drum 300 and a control unit 600 configured to control the driving unit 500. The driving unit 500 is connected to the dispersing drum 300 and may apply a rotational force to the dispersing drum 300. For example, the driving unit 500 may include a motor.

The control unit 600 may be connected to the driving unit 500 and may be configured to control the speed of rotation of the dispersing drum 300. For example, the control unit 600 may be formed as a reducer to variously adjust a speed of rotation of the dispersing drum 300. When a plurality of dispersing drums 300 are formed, the control unit 600 may perform control to make the speed of rotation different for each dispersing drum 300, and may also perform control to selectively apply the rotational force to each dispersing drum 300.

In an example embodiment, the control unit 600 may be configured to control the speed of rotation of the dispersing drum 300 based on the type of electrode powder P. For example, the control unit 600 may control the speed of rotation of the dispersing drum 300 based on a material of the electrode powder P or a ratio of the binder, active material, and conductive material.

In other example embodiments, the control unit 600 may be configured to control the speed of rotation of the dispersing drum 300 based on the feeding condition of the electrode powder P supplied to the feeding device 100. For example, the control unit 600 may be configured to control the speed of rotation of the dispersing drum 300 based on the amount of feeding or speed of feeding of the electrode powder P supplied to the feeding device 100.

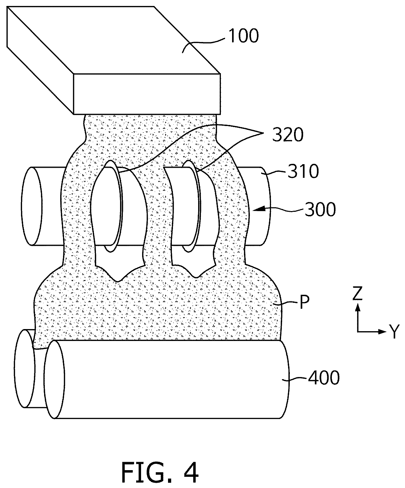

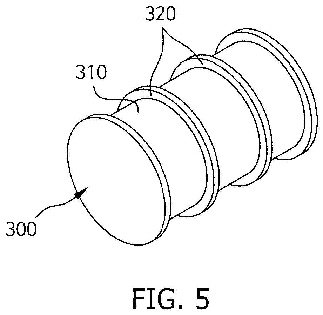

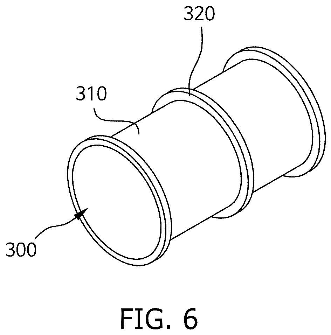

FIG. 4 illustrates the electrode powder branching off along the dispersing drum in an electrode manufacturing device according to an example embodiment of the present disclosure. FIG. 5 illustrates an example of a dispersing drum on which two blades are formed. FIG. 6 illustrates an example of a dispersing drum on which one blade is formed.

In an example embodiment, the dispersing drum 300 may include a cylindrical base 310 and a blade 320 formed on the base. The base 310 may be formed in a cylindrical shape to extend in the Y-axis direction. The base 310 may rotate by receiving the rotational force from the driving unit.

In an example embodiment, the outer circumferential surface of the base 310 may correspond to the inner space of the guide chute. Accordingly, the electrode powder P discharged from the feeding device 100 may be introduced into the guide chute along the outer circumferential surface of the base 310.

At least one or more blades 320 may be separate from each other in the width direction (Y-axis direction) of the base 310. The blade 320 may be formed such that the electrode powder P supplied from the feeding device 100 is divided and dispersed into a plurality of branches. For example, as shown in FIG. 4 and FIG. 5, two blades 320 may be formed. In such a case, the electrode powder P may be dispersed into three branches. In the other example embodiments, as shown in FIG. 6, the blade 320 may be formed as a single blade 320, and the electrode powder P may be dispersed into two branches. The number of blades 320 is not limited thereto, and any number may be used.

The dispersing drum 300 may divide the electrode powder **P,** which is dropped from the feeding device 100 to the press roller 400, into a plurality of branches, and disperse the electrode powder P in the width direction (Y-axis direction). For example, the blade 320 may provide a slope to the electrode powder P dropped from the feeding device 100 into the guide chute, guiding the electrode powder P to the slope. Therefore, the blade 320 may send the electrode powder P in the width direction (Y-axis direction) of the base 310.

Accordingly, the electrode powder P may be dispersed into a plurality of branches in the width direction of the base 310. With such a configuration, despite the particle size segregation phenomenon that occurs when the electrode powder P is fed, a more uniform particle size distribution of the electrode powder P in the width direction (Y-axis direction) of the guide chute may be achieved. Therefore, the electrode powder P may be dispersed with the substantially uniform particle size distribution in the width direction (Y-axis direction), and may be fed into the press roller 400. The electrode powder P may be pressed through the press roller 400 with the substantially uniform particle size distribution because the particle size segregation phenomenon is reduced or prevented from occurring.

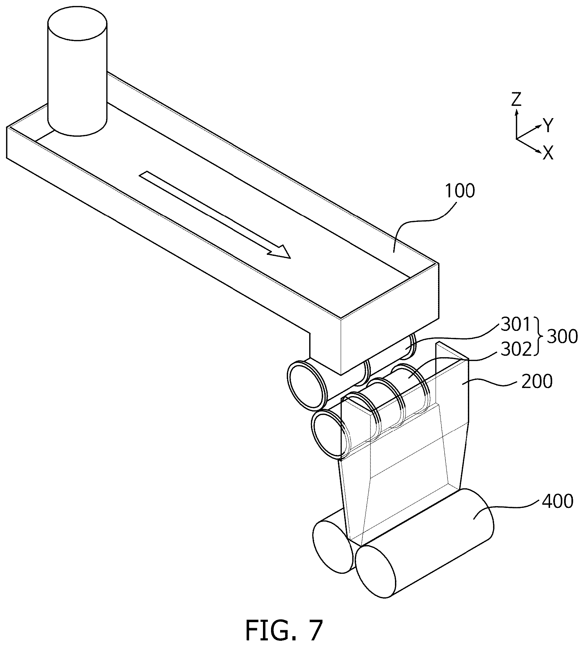

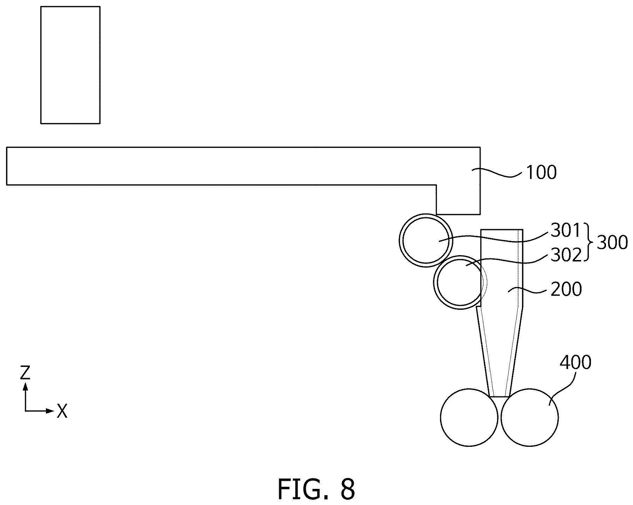

FIG. 7 illustrates an electrode manufacturing device according to other example embodiments of the present disclosure. FIG. 8 illustrates a side view of the electrode manufacturing device according to FIG. 7.

Referring to FIGS. 7 and 8, the dispersing drum 300 may include a first dispersing drum 301 and a second dispersing drum 302 located between the feeding device 100 and the guide chute 200. The second dispersing drum 302 may be closer to the guide chute 200 than the first dispersing drum 301. For example, the second dispersing drum 302 may be closer to the guide chute 200 than the first dispersing drum 301 in the Z-axis direction. In some example embodiments, the second dispersing drum 302 may be closer to the guide chute 200 than the first dispersing drum 301 in the X-axis direction.

In an example embodiment, the number of blades formed on the second dispersing drum 302 may be greater than the number of blades formed on the first dispersing drum 301. For example, the dispersing drum, on which the two blades shown in FIG. 5 are formed, may be disposed as the second dispersing drum 302, and the dispersing drum, on which one blade shown in FIG. 6 is formed, may be disposed as the first dispersing drum 301.

For example, the electrode powder introduced into the guide chute 200 from the feeding device 100 may be divided and dispersed into two branches along the first dispersing drum 301. That is, one blade may be formed on the first dispersing drum 301, dispersing the electrode powder in the width direction (Y-axis direction) for the first time. Continuously, the electrode powder may be divided and dispersed into three branches along the second dispersing drum 302. That is, two blades may be formed on the second dispersing drum 302, dispersing the electrode powder in the width direction (Y-axis direction) for the second time.

The first dispersing drum 301 and the second dispersing drum 302 may repeatedly perform a process of substantially uniformizing the particle size distribution of the electrode powder, which is introduced into the guide chute 200 from the feeding device 100, in the height direction (Z-axis direction). The height direction is defined as the direction of gravity. Accordingly, the particle size distribution of the electrode powder can be made more uniform.

FIGS. 7 and 8 illustrate a configuration where two dispersing drums 300 are disposed. However, the electrode manufacturing device according to an example embodiment of the present disclosure does not particularly limit the number of dispersing drums 300 disposed along the height direction (Z-axis direction).

The first dispersing drum 301 and the second dispersing drum 302 may be disposed between the feeding device 100 and the guide chute 200. The first dispersing drum 301 and the second dispersing drum 302 may disperse the electrode powder dropped from the feeding device 100 to the press roller 400 in the width direction (Y-axis direction), adjusting the particle size distribution in the width direction. Therefore, the electrode powder may be dispersed with the substantially uniform particle size distribution in the width direction (Y-axis direction) and may be fed to the press roller 400. That is, the dry electrode powder may be pressed through the press roller 400 with the substantially uniform particle size distribution because the particle size segregation phenomenon is reduced or prevented from occurring. The dry electrode plate manufactured in such a manner may have improved mechanical properties such as, e.g., tensile strength and formability of the free standing film, having improved quality.

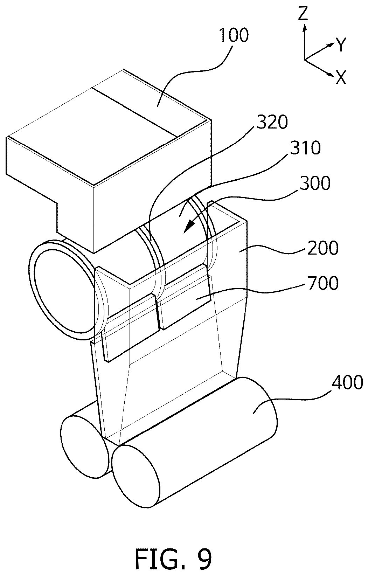

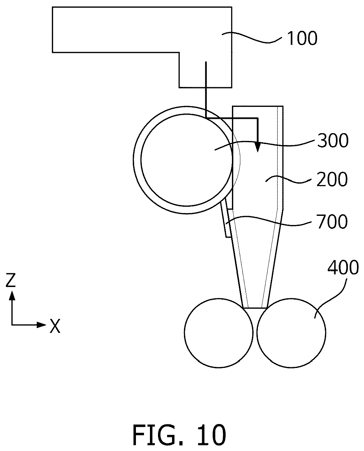

FIG. 9 illustrates an electrode manufacturing device according to some example embodiments of the present disclosure in which a back plate is formed. FIG. 10 illustrates a side of the electrode manufacturing device of FIG. 9.

In an example embodiment, the electrode manufacturing device may further include a back plate 700 combined with one end surface of the guide chute 200 adjacent to the dispersing drum 300. The back plate 700 may be formed in a planar plate shape. For example, two back plates 700 may be combined with one end surface of the guide chute 200 in the width direction.

The back plate 700 may help prevent the electrode powder from falling into the space between the dispersing drum 300 and the guide chute 200 when the electrode powder is introduced into the guide chute 200 from the feeding device 100 through the dispersing drum 300. That is, the back plate 700 may help prevent the electrode powder from falling into the gap in the X-axis direction between the dispersing drum 300 and the guide chute 200 when the electrode powder is introduced into the guide chute 200 from the feeding device 100 through the dispersing drum 300. For example, two back plates 700 may be disposed to be separated from each other in the width direction (Y-axis direction) of the base 310 on the basis of the blade 320 of the dispersing drum 300.

The back plate 700 may be separated from the outer circumferential surface of the base 310 without being in contact therewith so as not to interfere with the rotational movement of the dispersing drum 300. In some example embodiments, the back plate 700 may be separated from the outer circumferential surface of the blade 320 without being in contact therewith so as not to interfere with the rotational movement of the dispersing drum 300.

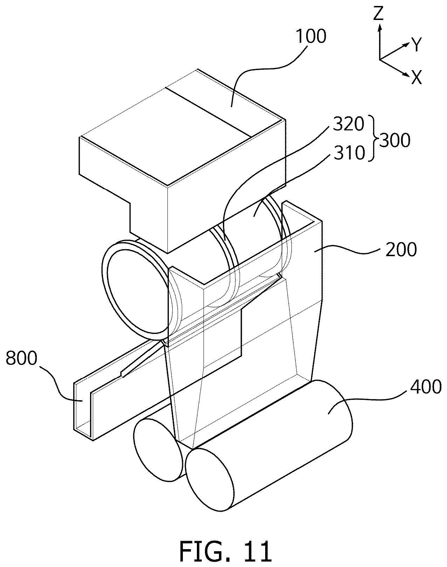

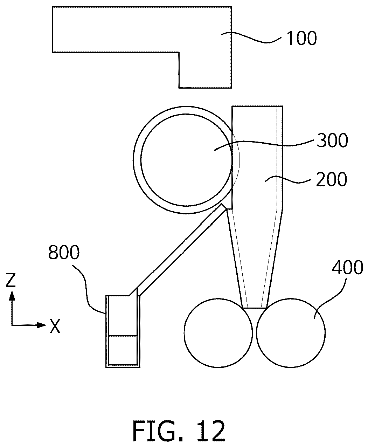

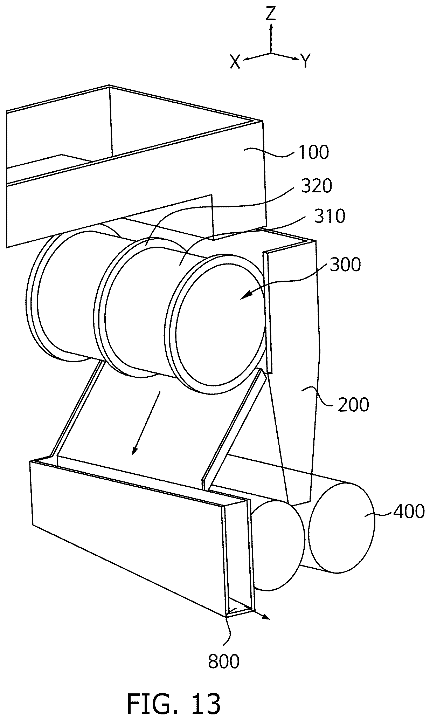

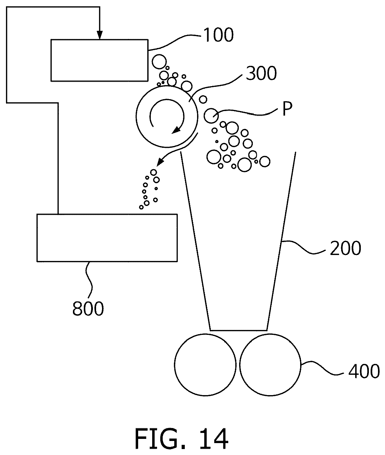

FIG. 11 illustrates an electrode manufacturing device according to some example embodiments of the present disclosure in which a collecting device is formed. FIG. 12 illustrates a side of the electrode manufacturing device of FIG. 11. FIG. 13 illustrates the electrode manufacturing device of FIG. 11 as viewed from a rear thereof. FIG. 14 illustrates a configuration of an electrode manufacturing device according to some example embodiments of the present disclosure in which a collecting device is formed.

In an example embodiment, the electrode manufacturing device may further include a collecting device 800 disposed under the dispersing drum 300. With such a configuration, at least a part of the electrode powder P that falls between the dispersing drum 300 and the guide chute 200 may be collected into the collecting device 800.

The collecting device 800 may be combined with one end surface of the guide chute 200. For example, the collecting device 800 may be configured with a planar plate on which the electrode powder P slides down and a case in which the fallen electrode powder P is received. The electrode powder P discharged from the feeding device 100 is dispersed by the blade 320 and introduced into the guide chute 200 along the outer circumferential surface of the base 310. In such a case, the electrode powder P may fall into the space between the base 310 and the guide chute 200. The collecting device 800 may be configured to allow the fallen electrode powder P to slide down onto one end surface of the guide chute 200 along the planar plate inclined downward in the Z-axis direction.

In an example embodiment, the collecting device 800 may collect the electrode powder P falling through the gap in the X-axis direction between the dispersing drum 300 and the guide chute 200 when the electrode powder P is introduced into the guide chute 200 from the feeding device 100 through the dispersing drum 300. The electrode powder P collected by the collecting device 800 may be returned to the feeding device 100. The recovered electrode powder P may be recycled by being supplied again from the feeding device 100 into the guide chute 200.

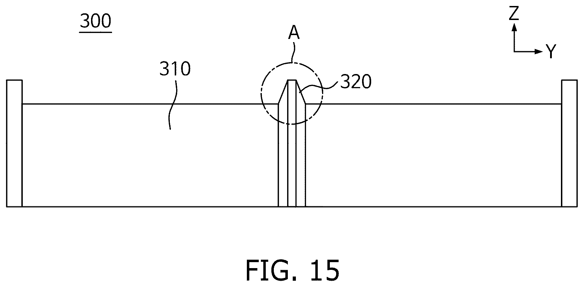

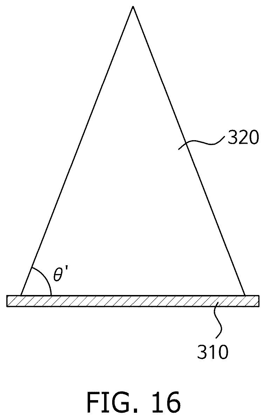

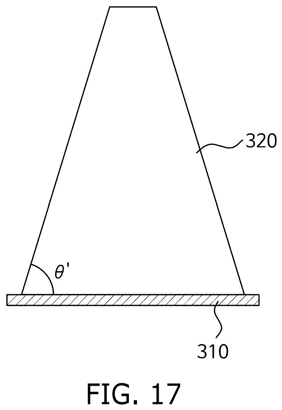

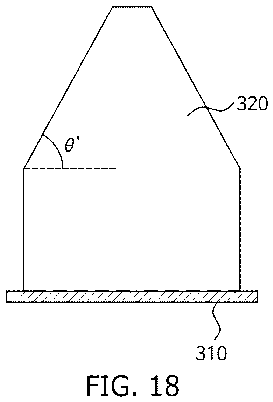

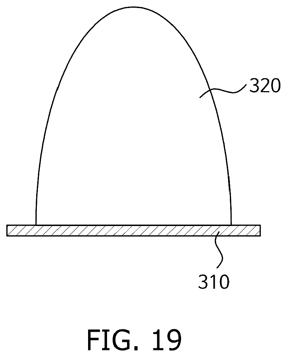

FIG. 15 illustrates a dispersing drum according to some example embodiments of the present disclosure. FIG. 16 illustrates an area A of FIG. 15 as an example of a cross-section shape of a blade. FIG. 17 illustrates the area A of FIG. 15 as an example of a cross-section shape of a blade. FIG. 18 illustrates the area A of FIG. 15 as an example of a cross-section shape of a blade. FIG. 19 illustrates the area A of FIG. 15 as an example of a cross-section shape of a blade.

Referring to FIG. 15, the dispersing drum 300 may include a cylindrical base 310 and a blade 320 that divides the base 310 in the Y-axis width direction. Guide surfaces may be formed at both ends of the base 310 to help prevent the electrode powder from getting out in the Y-axis width direction.

The slopes of the blade 320 may face both sides of the base 310 in the width direction. Accordingly, the blade 320 may have slopes for allowing the electrode powder to fall from the feeding device into the guide chute, guiding the electrode powder by the slopes. Therefore, the blade 320 may send the electrode powder in the width direction (Y-axis direction). Through the dispersion action and particle size distribution adjustment action of the dispersing drum 300, the particle size distribution of the electrode powder can be more uniform in the width direction of the guide chute.

Referring to FIGS. 16 to 18, the cross-section of the blade 320 may be formed as a polygon that is narrower at a position closer to the top. For example, similar to FIG. 16, the cross-section of the blade 320 may be formed as a triangular shape. For another example, similar to FIG. 17, the cross-section of the blade 320 may be formed as a trapezoidal shape of which the bottom side is longer than the top side thereof. For another example, similar to FIG. 18, the cross-section of the blade 320 may be formed such that the lower part thereof has a square shape and the upper part thereof has a trapezoidal shape.

In FIG. 18, an angle (θ') of the slope of the cross-section of the blade 320 with respect to the base 310 may be greater than a repose angle of the electrode powder. The repose angle of the electrode powder may indicate an angle at which the electrode powder is piled up without collapsing when piled up in a mountain shape. For example, the repose angle of the electrode powder may refer to an angle at which the electrode powder slides down when placed on the slope of the blade 320.

In an example embodiment, the blade 320 may have a cross-section shape having an angle of slope (θ') that is greater than the repose angle of the electrode powder. Accordingly, the electrode powder may be substantially prevented from remaining on the blade 320. The blade 320 may guide the electrode powder to the slope when the electrode powder supplied from the feeding device moves downward in the Z-axis direction along the dispersing drum 300. Accordingly, the electrode powder may move toward both sides of the base 310 in the width direction (Y-axis direction) on the basis of the blade 320, and may be divided and dispersed into a plurality of branches.

Referring to FIG. 19, the cross-section of the blade 320 may have a curved shape that is narrower at a position closer to the top. The blade 320 may guide the electrode powder supplied from the feeding device to a curved surface when the electrode powder P moves downward in the Z-axis direction along the dispersing drum 300. The curved cross-section shape of the blade 320 may be narrower at a position closer to the top. Therefore, the electrode powder may move along the outer circumferential surface of the blade 320 to the base 310. Accordingly, the electrode powder may move toward both sides of the base 310 in the width direction (Y-axis direction) on the basis of the blade 320, and may be divided and dispersed into a plurality of branches.

In an example embodiment, the blade 320 may be detachable from the base 310. A position of the blade 320 may be adjusted in the width direction (Y-axis direction) of the base 310. In an example embodiment, the position of the blade 320 may be set on the basis of the type of electrode powder. For example, the position of the blade 320 may be set based on the material of the electrode powder, or based on the ratio of the binder, active material, and conductive material.

In the other example embodiments, the position of the blade 320 may be set based on the feeding condition of the electrode powder supplied to the feeding device. For example, the position of the blade 320 may be set based on the amount of feeding or the speed of feeding of the electrode powder supplied to the feeding device.

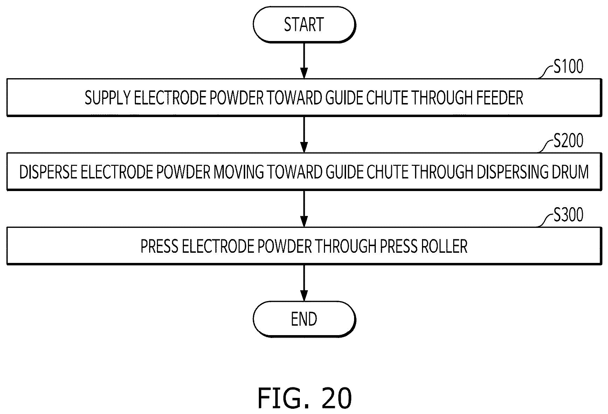

FIG. 20 illustrates a flowchart showing an example of an electrode manufacturing method according to an example embodiment of the present disclosure.

In an example embodiment, the electrode manufacturing method may be performed by the electrode manufacturing device illustrated in FIG. 1. First, the electrode manufacturing method may start from the operation of supplying the electrode powder to the guide chute through the feeding device (S100).

In supplying the electrode powder (S100), the feeding device may uniformly, or substantially uniformly, disperse the electrode powder P in the width direction, and may supply the electrode powder to the guide chute. For example, the feeding device may substantially uniformly disperse the electrode powder P through vibration, and may supply the electrode powder to the guide chute.

After supplying the electrode powder (S100) is performed, an operation of dispersing the electrode powder moving to the guide chute through the dispersing drum (S200) may be performed. In dispersing the electrode powder (S200), the dispersing drum positioned between the feeding device and the guide chute may disperse the electrode powder moving from the feeding device to the guide chute.

In dispersing the electrode powder (S200), the dispersing drum may include a base that has a cylindrical shape, and at least one or more blades that are separate from each other in a width direction of the base and that are formed such that the electrode powder supplied from the feeding device is divided and dispersed into a plurality of branches. An outer circumferential surface of the base may correspond to an inner space of the guide chute, and the electrode powder discharged from the feeding device may be introduced into the guide chute along the outer circumferential surface of the base.

In dispersing the electrode powder (S200), a cross-section of the blade may be formed as a polygon that is narrower at a position closer to a top of the blade, and an angle of a slope of the cross-section of the blade with respect to the base may be greater than a repose angle of the electrode powder.

In an example embodiment, the electrode manufacturing method may further include controlling a speed of rotation of the dispersing drum by controlling a driving unit connected to the dispersing drum. For example, controlling the speed of rotation may include controlling the speed of rotation of the dispersing drum via the control unit, based on at least one of a type of the electrode powder or a feeding condition of the electrode powder supplied to the feeding device.

In dispersing the electrode powder (S200), the dispersing drum may include a first dispersing drum and a second dispersing drum between the feeding device and the guide chute. In such a case, the second dispersing drum may be closer to the guide chute than the first dispersing drum, and the number of blades formed on the second dispersing drum may be greater than the number of blades formed on the first dispersing drum. Dispersing the electrode powder (S200) may include dispersing the electrode powder through the first dispersing drum, and dispersing the electrode powder through the second dispersing drum. Thus, a process of substantially uniformizing the particle size distribution of the electrode powder introduced into the guide chute from the feeding device may be repeatedly performed in the height direction. Accordingly, the particle size distribution of the electrode powder can be made more uniform.

After dispersing the electrode powder (S200) is performed, an operation of pressing the electrode powder through the press roller (S300) may be performed. The operation of pressing the electrode powder through the press roller (S300) may include pressing the electrode powder discharged from the discharge end of the guide chute through the press roller.

In an example embodiment, the electrode manufacturing method may further include collecting at least a portion of the electrode powder that falls between the dispersing drum and the guide chute through a collecting device disposed under the dispersing drum, and supplying at least the part of the electrode powder collected in the collecting device to the feeding device. The electrode powder returned in the operation of collecting at least the portion of the electrode powder may be supplied to the guide chute and recycled through the operation of supplying at least the portion of the electrode powder to the feeding device.

The flow chart of FIG. 20 and the description above are merely examples of the present disclosure, and the scope of the present disclosure is not limited to the flow chart of FIG. 20 and the description described above. For example, one or more operations in the flow chart and the description described above may be added/changed/deleted, the order of one or more operations may be changed, and one or more operations may be performed simultaneously or contemporaneously.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure and the claims and their equivalents, below.

## Claims

1. An electrode manufacturing device comprising:
a feeding device (100) configured to supply electrode powder (P);
a guide chute (200) that is adjacent to a discharge end of the feeding device (100) and arranged such that the electrode powder (P) supplied from the feeding device (100) is introduced into the guide chute (200);
one or more dispersing drums (300) between the feeding device (100) and the guide chute (200) and configured to disperse the electrode powder (P) being moved from the feeding device (100) to the guide chute (200); and
a press roller (400) adjacent to a discharge end of the guide chute (200) and configured to press the electrode powder (P) discharged from the guide chute (200).

2. The electrode manufacturing device as claimed in claim 1, wherein the dispersing drum (300) comprises:
a base (310) that has a cylindrical shape with a width direction being defined by a rotational axis of the cylindrical shape; and
one or more blades (320) that are separate from each other in the width direction of the base (310) and that are formed such that the electrode powder (P) supplied from the feeding device (100) is divided into a plurality of branches.

3. The electrode manufacturing device as claimed in claims 1 or 2, wherein in a width direction a width of the dispersing drum (300) is less than a width of the guide chute (200), the width direction being defined by a rotational axis of a cylindrical shape of a base (310) of the dispersing drum (300).

4. The electrode manufacturing device as claimed in claim 2 or 3,
wherein the electrode manufacturing device comprises more than one dispersing drums (300), wherein a first dispersing drum (301) and a second dispersing drum (302) are arranged between the feeding device (100) and the guide chute (200),
wherein the second dispersing drum (302) is closer to the guide chute (200) than the first dispersing drum (301), and
wherein a number of blades (320) formed on the second dispersing drum (302) is greater than the number of blades (320) formed on the first dispersing drum (301).

5. The electrode manufacturing device as claimed in any of claims 2 to 4,
wherein the base (310) is configured to rotate around the rotational axis, and wherein the rotation of an outer circumferential surface of the base (310) is such that the electrode powder (P) is directed into an inner space of the guide chute (200), and
wherein the rotation is such that the electrode powder (P) discharged from the feeding device (100) is introduced into the guide chute (200) along the outer circumferential surface of the base (310).

6. The electrode manufacturing device as claimed in any of claims 2 to 5, wherein:
a cross-section of the blade (320) along the rotational axis is a polygon that is narrower at a position closer to a top of the blade (320), and
an angle of a slope of the cross-section of the blade (320) with respect to the base (310) is greater than a repose angle of the electrode powder (P).

7. The electrode manufacturing device as claimed in any of claims 2 to 5, wherein a cross-section of the blade 320 along the rotational axis is a curved shape that is narrower at a position closer to a top of the blade (320).

8. The electrode manufacturing device as claimed in any of claims 2 to 7, wherein:
the blade 320 is detachable from the base 310, and
a position of the blade 320 is adjusted in the width direction of the base 310.

9. The electrode manufacturing device as claimed in any of claims 1 to 8, further comprising:
a driving unit (500) connected to the dispersing drum (300) and configured to apply a rotational force to the dispersing drum (300); and
a control unit (600) connected to the driving unit (500) and configured to control a speed of rotation of the dispersing drum (300).

10. The electrode manufacturing device as claimed in claim 9, wherein the control unit (600) is configured to control the speed of rotation of the dispersing drum (300) based on at least one of a type of the electrode powder (P) or a feeding condition of the electrode powder (P) supplied to the feeding device (100).

11. The electrode manufacturing device as claimed in any of claims 1 to 10, further comprising:
a back plate (700) connected to one end surface of the guide chute (200) adjacent to the dispersing drum (300).

12. The electrode manufacturing device as claimed in any of claims 1 to 11, further comprising:
a collecting device (800) being arranged with respect to the direction of gravity under the dispersing drum (300) and further being arranged such that at least a part of the electrode powder (P) falling between the dispersing drum (300) and the guide chute (200) is collected by the collecting device (800).

13. An electrode manufacturing method, the method being preferably performed with an electrode manufacturing device configured according to any of the previous claims, the method comprising the steps:
supplying electrode powder (P) toward a guide chute (200) through a feeding device (100);
dispersing the electrode powder (P) moving from the feeding device (100) to the guide chute (200) through one or more dispersing drums (300) positioned between the feeding device (100) and the guide chute (200); and
pressing the electrode powder (P) discharged from a discharge end of the guide chute (200) through a press roller (400).

14. The electrode manufacturing method as claimed in claim 13, further comprising the step:
collecting at least a portion of the electrode powder (P) falling between the dispersing drum (300) and the guide chute (200) through a collecting device (800) disposed with respect to the direction of gravity under the dispersing drum (300); and
supplying at least the portion of the electrode powder (P) collected in the collecting device (800) to the feeding device (100).

15. The electrode manufacturing method as claimed in claim 13, further comprising the step:
controlling a speed of rotation of the dispersing drum (300) by controlling a driving unit (500) connected to the dispersing drum (300).
